# EUROPÄISCHE PATENTANMELDUNG

(11) **EP 1 689 007 A1**
(43) Veröffentlichungstag der Anmeldung: **09.08.2006**
(21) Anmeldenummer: 05023520.9
(22) Anmeldetag: 27.10.2005
(51) Int. Cl.: H01M 2/16, D04H 1/54, D04H 3/16

(54) **Vliesstoff, Faser und elektrochemische Zelle**

(30) Priorität: 08.02.2005 DE 102005005852
(71) Anmelder: Carl Freudenberg KG, 69469 Weinheim (DE)
(72) Erfinder: Kritzer, Peter, 67147 Forst (DE); Feistner, Hans-Joachim, 69518 Abtsteinach (DE); Schilling, Holger, 79423 Heitersheim (DE); Kalbe, Michael, 08190 Sant Cugat (ES)

(57) **Zusammenfassung**

Ein Vliesstoff, insbesondere zur Verwendung als Separator in Batterien oder elektrochemischen Zellen, umfassend funktionelle Fasern aus mindestens einem Fasermaterial, welches intrinsisch zumindest einen Stoff umfasst, welcher im alkalischen Medium chemisch aktiv oder aktivierbar ist, ist im Hinblick auf die Aufgabe, eine elektrochemische Zelle zu schaffen, welche bei einfacher und problemloser Fertigung eine lange Lebensdauer aufweist, dadurch gekennzeichnet, dass der Stoff ausschließlich in Volumenbereichen der funktionalen Fasern oberflächenwirksam inkorporiert ist, deren Oberflächen mit dem Medium beaufschlagbar sind. Eine Faser besteht aus dem genannten Fasermaterial. Eine elektrochemische Zelle umfasst diesen Vliesstoff als Separator.

## Beschreibung

### Technisches Gebiet

Die Erfindung betrifft einen Vliesstoff, insbesondere zur Verwendung als Separator in Batterien oder elektrochemischen Zellen, umfassend funktionelle Fasern aus mindestens einem Fasermaterial, welches intrinsisch zumindest einen Stoff umfasst, welcher im alkalischen Medium chemisch aktiv oder aktivierbar ist. Des Weiteren betrifft die Erfindung eine Faser, umfassend ein Fasermaterial, welches intrinsisch zumindest einen Stoff umfasst, welcher im alkalischen Medium chemisch aktiv oder aktivierbar ist. Schließlich betrifft die Erfindung eine elektrochemische Zelle, insbesondere Batterie, mit einem Gehäuse, wobei das Gehäuse zumindest teilweise mindestens eine positive und eine negative Elektrode sowie ein Material aufnimmt, welches den Transport von Ladungsträgern erlaubt, und wobei ein Separator die Elektroden trennt, wobei der Separator einen Vliesstoff oder zumindest eine Faser umfasst.

### Stand der Technik

Alkalische Batterien oder Zellen benötigen Separatorenmaterialien, die besondere Eigenschaften aufweisen müssen. Zu diesen Eigenschaften zählen eine Beständigkeit gegen den Elektrolyten, Beständigkeit gegen Oxidation, hohe mechanische Stabilität, geringe Dickentoleranz, geringer Ionendurchgangswiderstand, ein hoher Elektronendurchgangswiderstand, ein Rückhaltevermögen für von den Elektroden abgelöste Feststoffpartikel, permanente Benetzbarkeit durch den Elektrolyten und ein hohes Speichervermögen für die Elektrolytflüssigkeit.

Je nach dem eingesetzten Polymer, aus dem der Separator hergestellt ist, weisen die entsprechenden Separatormaterialien jedoch verschiedene Vor- und Nachteile auf. So sind beispielsweise Separatoren aus Polyolefinen sehr gut widerstandsfähig gegen den chemischen Angriff durch stark alkalische Elektrolyten und gegen Oxidation im chemischen Umfeld der Zellen. Die Benetzbarkeit durch den alkalischen Elektrolyten ist jedoch schlecht. Polyamid ist dagegen immer ausreichend gut benetzbar, jedoch ist seine Hydolysebeständikeit besonders bei höheren Temperaturen nicht vollständig.

Beim Einsatz in Nickel-/Metallhydrid- oder Nickel-/Cadmium-Akkumulatoren kommt dem Separator eine weitere Aufgabe zu. Solche Akkumulatoren zeigen den Nachteil einer beschleunigten Selbstentladung. Der Ladungstransport erfolgt durch Ionen, welche im Elektrolyten von der negativen Cadmium- oder Metallhydridelektrode zur positiven Nickeloxidelektrode transportiert werden. Die Zelle entlädt sich langsam von selbst auch im Ruhezustand. Bei extremer Tiefenentladung können dabei in manchen Fällen Elektroden unbrauchbar werden, was zum Totalverlust des Akkumulators führt.

Als Mechanismus für diese unerwünschte Selbstentladung werden Stickstoffverbindungen diskutiert, die durch Reduktion an der negativen Elektrode und durch Oxidation an der positiven Elektrode für den Transport der Elektronen verantwortlich sind.

Der Einfluss verschiedener Separator-Materialien auf die Selbstentladung von Nickel-/Cadmium- bzw. Nickel-/Metallhydrid-Akkumulatoren ist in der Literatur beschrieben (P. Kritzer; J. Power Sources 2004, 137, 317-321).

Das eingesetzte Separatorenmaterial soll die Selbstentladung vermindern oder unterdrücken. Dies wird derzeit so gelöst, dass durch das Abfangen von Ammoniak durch den Separator die Entladung verlangsamt wird.

Solche Ammoniak bindenden Separatoren werden derzeit nach einem Herstellungsprozess hergestellt, der die Behandlung von Polyolefin-Vliesstoffen in einem weiteren Arbeitsschritt umfasst. Dabei können sowohl durch Pfropfung von Acrylsäure als auch durch Sulfonierung mittels konzentrierter Schwefelsäure die gewünschten Eigenschaften erzielt werden. Nachteilig hierbei ist der zweite Arbeitsschritt nach Fertigung des Vliesstoffs. Produkte, die nach diesen Produktionsverfahren hergestellt werden, sind z.B. von der Fa. Japan Vilene Co., JP (sulfonierte Materialien) bzw. der Fa. Scimat Ltd., UK (Acrylsäure-gepfropfte Materialien) kommerziell erhältlich.

Ein weiterer Herstellungsprozess umfasst das Aufbringen von Ammoniakaufnehmenden Pulvern bzw. Dispersionen. Dabei kommen mit Acrylsäure gepfropfte Polyolefine zum Einsatz. Nachteilig hierbei ist, dass bei solchen Produkten im Bereich der aufgebrachten Partikel "versiegelte Stellen" entstehen können, die sich nachteilig auf die Batterie-Eigenschaften auswirken können. Produkte, die nach dieser Herstellungsart produziert werden, sind kommerziell von der Fa. Freudenberg Vliesstoffe KG, Weinheim, Deutschland erhältlich.

Insoweit weisen die gattungsbildenden Vliesstoffe erhebliche Nachteile im Hinblick auf deren Fertigung und späteren Einsatz auf.

### Darstellung der Erfindung

Der Erfindung liegt daher die Aufgabe zu Grunde, eine elektrochemische Zelle zu schaffen, welche bei einfacher und problemloser Fertigung eine lange Lebensdauer aufweist. Die vorliegende Erfindung löst die zuvor genannte Aufgabe durch die Merkmale des Patentanspruchs 1. Danach ist ein Vliesstoff dadurch gekennzeichnet, dass der Stoff in Volumenbereichen der funktionalen Fasern oberflächenwirksam inkorporiert ist, deren Oberflächen mit dem Medium beaufschlagbar sind.

Erfindungsgemäß ist in einem ersten Schritt erkannt worden, dass die Eigenschaften einer elektrochemischen Zelle durch den in ihr verwendeten Vliesstoff bzw. die in ihr verwendeten Fasern bestimmt wird. Des Weiteren ist erkannt worden, dass chemisch aktive oder aktivierbare Stoffe nachhaltig und gezielt dadurch einsetzbar sind, dass sie in der Fasermatrix inkorporiert und verteilt angeordnet sind. Schließlich ist in einem dritten Schritt erkannt worden, dass die selektive Zuordnung der chemisch aktiven Stoffe lediglich zu solchen Bereichen, welche mit dem Medium in Kontakt kommen können, eine sparsame und effektive Verwendung der Stoffe ermöglicht. Insoweit ist nur der Teil der Fasermatrix durch die chemisch aktiven Stoffe modifiziert, der dieser Modifizierung bedarf. Eine nachteilige Beeinflussung des Gesamtaufbaus der Fasern auf Grund der Modifizierung ist insoweit ausgeschlossen. Die Inkorporierung des chemisch aktiven Stoffes stellt sicher, dass an der Oberfläche bereits verbrauchte Stoffe aus dem Inneren des Volumenbereichs nachfolgen können. Insoweit ist gewährleistet, dass die elektrochemische Zelle eine besonders lange Lebensdauer aufweist.

Folglich ist die eingangs genannte Aufgabe gelöst.

Die funktionellen Fasern könnten Mehrkomponentenfasern umfassen. Diese Fasertypen sind leicht herzustellen, da die Methoden zu ihrer Herstellung bereits gut bekannt sind.

Vor diesem Hintergrund ist denkbar, dass die Mehrkomponentenfasern Seite-an-Seite-Fasern umfassen. Seite-an-Seite-Fasern sind kommerziell leicht verfügbar.

Zur Erzielung einer solchen Stabilisierung könnten die Fasern Kern-Mantel-Fasern umfassen, wobei der Kern die stabilisierende Wirkung entfalten müsste.

Ausschließlich eine Komponente der Mehrkomponentenfasern könnte den Stoff umfassen. Diese konkrete Ausgestaltung stellt sicher, dass in der Faser Bereiche geschaffen werden können, welche nicht durch die Modifizierung mit dem Stoff in ihrer Struktur beeinflusst werden.

Die Mantel-Komponente einer Kern-Mantel-Faser könnte den Stoff umfassen. Hierdurch ist realisierbar, dass der Stoff auf dem gesamten Umfang einer Faser mit dem alkalischen Medium wechselwirken kann. Insofern ist eine besonders große reaktive Oberfläche realisierbar.

Der Vliesstoff könnte eine Fasermischung mit einem Anteil an funktionalen Fasern von mindestens 15 Gewichts-% umfassen. Die Untergrenze von 15 Gewichts-% repräsentiert einen Wert, mit dem eine ausreichend Lange Entladungsdauer der elektrochemischen Zelle realisierbar ist. Werden weniger funktionale Fasern eingesetzt, so erfolgt die Selbstentladung zu schnell und die Zelle weist gegenüber Zellen, die mit herkömmlichen Separatoren ausgestattet sind, keinen Vorteil auf.

Zumindest ein Stoff könnte als durch Copolymerisation gebildetes Polymer ausgebildet sein. Die Durchführung einer Copolymerisation liefert ein Material, welches eine besonders homogene und stabile innere Struktur aufweist. Hierdurch ist sicher gestellt, dass chemisch aktive Moleküle in besonders vorteilhafter Weise in einem Volumen verteilt sind.

Zumindest ein Stoff könnte als ein durch Pfropfung gebildetes Polymer ausgebildet sein. Dabei ist insbesondere denkbar, dass die funktionalen Polymere in der Schmelze oder Lösung oder in einer Dispersion vorliegend mit Acrylsäure gepfropft werden und diese anschließend zu Fasern gesponnen werden. Alternativ könnten Fasern in einer Dispersion nach dem Spinnen mit Acrylsäure gepfropft werden. Danach können die Fasern ohne weitere chemische Modifizierung in nachgelagerten Prozessen zu einem Vliesstoff weiterverarbeitet werden.

Die Fasern könnten durch Copolymerisation oder Pfropfung mittels reaktiver Extrusion der Polymere funktionalisiert werden und dadurch funktionelle Gruppen im Molekül besitzen oder im alkalischen Elektrolyt bilden, welche Ammoniak aus alkalischer Lösung binden können. Vor diesem Hintergrund könnten die Polymere funktionelle Gruppen enthalten, welche im alkalischen Medium als Lewis-Säuren wirksam sind. Diese konkrete Ausgestaltung stellt sicher, dass durch die funktionellen Fasern Ammoniak in alkalischer Lösung gebunden werden kann. Hierdurch ist eine Entladung der elektrochemischen Zelle wirksam verlangsamt.

Die Polymere könnten Polypropylen (PP), Polyethylen (PE) oder andere Polyolefine umfassen. Die Verwendung solcher Polymere ist vor dem Hintergrund einer problemlosen Fertigung von Vorteil, da deren Materialeigenschaften bekannt und Fertigungsprozesse leicht kalkulierbar und reproduzierbar sind.

Denkbar ist auch, dass das Fasermaterial durch Copolymerisation oder Pfropfung mittels reaktiver Extrusion eines Polyolefins, Polystyrens, Polyphenylensulfids, Polysulfon, Ethylenvinylalkohols oder Mischungen daraus in der Masse funktionalisiert ist. Eine Pfropfung ist auch in einer PolymerDispersion denkbar.

Der Vliesstoff könnte durch ein Ammoniakaufnahmevermögen von mindestens 0,1 mmol pro g Vliesstoffgewicht gekennzeichnet sein. Dieses Aufnahmevermögen stellt sicher, dass der Entladungsprozess der elektrochemischen Zelle in ausreichendem Maße verlangsamt wird.

Besonders bevorzugt könnte ein Vliesstoff mindestens 0,1 mmol NH3/g Vliesstoffmasse, 0,2 mmol NH3/g oder mindestens 0,4 mmol NH3/g Vliesstoffmasse binden. Diese ausgewählten Werte stellen charakteristische Werte dar, bei denen die Entladungsdauer besonders deutlich verlängert wird.

Der Vliesstoff könnte eine Fasermischung aufweisen, welche gegenüber konzentrierter Lauge hydrolysebeständige Fasern umfasst. Hierdurch ist sichergestellt, dass der Vliesstoff einen stabilen Aufbau aufweist und im alkalischen Medium nicht zerfällt.

Um eine gute Benetzbarkeit zu erreichen, könnte der Vliesstoff hydrophile Eigenschaften, insbesondere hydrophile Oberflächen, aufweisen. Diese könnten durch einen Fluorierungsprozess, eine Plasmabehandlung oder durch eine Sulfonierung erzielt werden. Denkbar ist auch, das Vliesstoffmaterial durch polare, ungesättigte, organische Substanzen zu pfropfen. Vor diesem Hintergrund ist auch denkbar, ein Netzmittel aufzubringen. Netzmittel sind kommerziell problemlos erhältlich.

Der Vliesstoff könnte ein Flächengewicht von 15 bis 300 g/m² aufweisen. Dieser Bereich stellt sicher, dass der Vliesstoff ein ausreichendes Fluidaufnahmevermögen aufweist und zugleich eine elektrochemische Zelle eines gebrauchstauglichen Gewichts realisierbar macht.

Der Vliesstoff könnte eine Dicke von 20 bis 400 µm aufweisen. Dieser Bereich stellt sicher, dass eine elektrochemische Zelle mit gebrauchstauglichen Innen-und Außendimensionen realisierbar ist.

Der Vliesstoff könnte durch eine Nassvlies-Technologie gefertigt sein. Diese Fertigung stellt sicher, dass die Vliesstoffe eine hohe Homogenität aufweisen.

Denkbar ist auch, den Vliesstoff nach einer Trockenvlies-Technologie zu fertigen. Diese Technologie beaufschlagt das Vliesstoffmaterial nicht mit Medien, welche das Vliesstoffmaterial in seiner Stabilität negativ beeinflussen.

Der Vliesstoff könnte auch mittels einer Spinnvlies-Meltblown-Technologie gefertigt sein. Diese Fertigung erlaubt die Herstellung von sehr dünnen Fasern und daher von Vliesstoffen hoher spezifischer Oberfläche.

Die eingangs genannte Aufgabe ist des Weiteren durch eine Faser mit den Merkmalen des Patentanspruchs 27 gelöst. Um Wiederholungen in Bezug auf die erfinderische Tätigkeit zu vermeiden, sei auf die Ausführungen zum Vliesstoff als solchem verwiesen.

Die Faser könnte einen Durchmesser aufweisen, der kleiner als 5 µm ist. Hierdurch ist die Verwendung von Feinstfasern möglich, was in einer großen Oberfläche des Vliesstoffs resultiert.

Die Faser könnte aus einem Fasermaterial gesponnen sein, welches erst nach dem Verspinnen durch den Stoff funktionalisiert wurde. Diese Ausgestaltung ermöglicht die Erzeugung von funktionellen Fasern aus kommerziell bezogenen Fasern. Insoweit ist die Fertigung und Modifizierung der Fasern an zwei getrennten Orten realisierbar.

Es ist auch denkbar, dass das Verspinnen der Faser aus einem durch den Stoff funktionalisierten Fasermaterial erfolgt. Dies erlaubt die Fertigung der funktionellen Fasern an einem Ort.

Die Faser oder eine Vielzahl von Fasern könnten in einem hochfibrillierten Zustand vorliegen. Diese Ausgestaltung erlaubt die Verwendung von Pulpmaterial zur Fertigung von Vliesstoffen. Pulpmaterial zeichnet sich durch eine extrem hohe Oberfläche aus.

Die in dieser Anmeldung beanspruchten Fasern könnten durch eine geometrische oder stoffliche Ausgestaltung gemäß den in den hier beschriebenen Vliesstoffen umfassten Fasern gekennzeichnet sein. Dabei ist insbesondere denkbar, dass als geometrische Ausgestaltung sämtliche Fasertypen, beispielsweise Kern-Mantel-Fasern o. ä., gewählt werden. Des Weiteren ist denkbar, die in dieser Anmeldung als Fasermaterial genannten oder der Funktionalisierung dienende Stoffe in allen sinnvollen Kombinationen zu verwenden.

Die eingangs genannte Aufgabe ist des Weiteren mit den Merkmalen des Patentanspruchs 33 gelöst. Um Wiederholungen in Bezug auf die erfinderische Tätigkeit zu vermeiden, sei auf die Ausführungen zum Vliesstoff als solchem verwiesen.

Es gibt nun verschiedene Möglichkeiten, die Lehre der vorliegenden Erfindung auf vorteilhafte Weise auszugestalten und weiterzubilden. Dazu ist einerseits auf die den nebengeordneten Patentansprüchen 1 und 27 nachgeordneten Ansprüche, andererseits auf die nachfolgende Erläuterung bevorzugter Ausführungsbeispiele der Erfindung anhand der Tabelle zu verweisen. In Verbindung mit der Erläuterung der bevorzugten Ausführungsbeispiele der Erfindung anhand der Tabelle werden auch im Allgemeinen bevorzugte Ausgestaltungen und Weiterbildungen der Lehre erläutert.

### Ausführung der Erfindung

- A): Ammoniak-bindende Polyolefin-Fasern wurden beispielhaft nach folgenden Verfahren hergestellt:
- 1.: Einsatz eines mit Acrylsäure gepfropften Polypropylens mit einem AS-Anteil von 5.5%.
Das Verspinnen zu Fasern erfolgte bei Extruder-Temperaturen von 210-215 °C. Die Spinndüsen-Lochdurchmesser betrugen 450 µm. Der Polymer-Durchsatz pro Düse betrug 0.11 cm³/min. Die Fasern wurden anschließend bei Temperaturen zwischen 80 und 100 °C um den Faktor 3 verstreckt. Die resultierenden Fasern wiesen einen Titer von ca. 2.5 dtex auf, das Ammoniak-Aufnahme-Vermögen betrug 0,58 mmol NH3/g.
- 2.: Einsatz eines mit Acrylsäure gepfropften Polyethylens mit einem AS-Anteil von 6.0%.
Das Verspinnen zu Fasern erfolgte bei Extruder-Temperaturen von 205-210 °C. Die Spinndüsen-Lochdurchmesser betrugen 450 µm. Der Polymer-Durchsatz pro Düse betrug 0.13 cm³/min. Die Fasern wurden anschließend bei Temperaturen zwischen 80 und 100 °C um den Faktor 3 verstreckt. Die resultierenden Fasern wiesen ebenfalls einen Titer von ca. 3 dtex auf. das Ammoniak-Aufnahme-Vermögen betrug 0,51 mmol NH3/g.
- 3.: Einsatz einer Kern-Mantel-Faser mit einem "Kern" aus Polypropylen und einem "Mantel" aus einem mit Acrylsäure gepfropften Polyethylen.
Als Kern-Polymer wurde ein Polypropylen-Typ der Fa. Borealis, DK, mit einem MFI-Wert von 37 bei 210°C verwendet. Der MFI-Wert ist als so genannter Melt-Flow-Index bekannt, welcher den Materialfluss einer Schmelze durch eine Düse definierten Durchmessers bei bestimmten Druck- und Temperaturbedingungen repräsentiert. Als Mantel-Polymer wurde das in Ausführungsbeispiel 2 genannte modifizierte Polyethylen verwendet. Das Kern/Mantel-Verhältnis betrug 50:50. Der erzielte Titer der Fasern lag bei ca. 1.7 dtex. Das Ammoniak-Aufnahme-Vermögen der Fasern betrug 0,38 mmol NH3/g.
- 4.: Einsatz einer Polypropylen-Faser für den Melt-Blown-Prozess.
Polypropylen der Firma Borealis, DK, mit einem MFI-Wert von 800 wurde funktionalisiert und bei T=270°C versponnen. Die erzielten Faserdurchmesser betrugen 4 µm.
- 5.: Modifizierung von bereitgestellten Kurzschnittfasern.
Hierzu wurden Kern-Mantel-Fasern aus Polyolefin der Firma Daiwabo eingesetzt. Diese umfassten eine Schnittlänge von 6 mm und einen Titer von 0,8 dtex. Diese Fasern wurden in Dispersion mit Acrylsäure gepfropft. Die modifizierten Fasern wiesen ein Ammoniak-Aufnahmevermögen von 0,3 mmol NH3 / g auf.
- B): Aus den Fasern der Ausführungsbeispiele A) 1. bis A) 5. wurden Vliesstoffe hergestellt. Als funktionalisierte Fasern wurden dabei Kurzschnitt-Fasern mit Längen von 6 mm eingesetzt.
- 1.: Einsatz der unter A) 1. genannten modifizierten PP-Fasern:
Die Fasern wurden mit Polyolefin-Kern/Mantel-Fasern mit einem Titer von 0.8 dtex (Fa. Daiwabo, JP) in einem Mischungsverhältnis von 60:40 dispergiert und ein Nassvlies gelegt. Das entstandene Vlies mit einem Flächengewicht von 60 g/m² wurde anschließend bei ca. 135°C thermisch gebunden und auf eine Dicke von 140 µm kalandert. Das gemessene Ammoniak-Bindevermögen betrug 0,32 mmol NH3 pro g Vliesstoff.
- 2.: Einsatz der unter A) 2. genannten modifizierten PE-Fasern:
Die Fasern wurden mit reinen Polypropylen-Fasern mit einem Titer von 0.8 dtex (Fa. Daiwabo, JP) in einem Mischungsverhältnis von 40:60 dispergiert und ein Nassvlies gelegt. Das entstandene Vlies mit einem Flächengewicht von 60 g/m² wurde anschließend bei ca. 140°C thermisch gebunden und auf eine Dicke von 140 µm kalandert. Das gemessene Ammoniak-Bindevermögen betrug 0,24 mmol NH3 pro g Vliesstoff.
3. Einsatz der unter A) 3. genannten modifizierten Kern-Mantel-Fasern:
Die reinen Fasern wurden dispergiert und ein Nassvlies gelegt. Das entstandene Vlies mit einem Flächengewicht von 60 g/m² wurde anschließend bei 140°C thermisch gebunden und auf eine Dicke von 140 µm kalandert. Das gemessene Ammoniak-Bindevermögen betrug 0,39 mmol NH3 pro g Vliesstoff.
In einem weiteren Beispiel wurden 70% der Kern-Mantel-Fasern mit 30% reinen Polypropylen-Fasern mit einem Titer von 0.8 dtex (Fa. Daiwabo, JP) dispergiert und ein Nassvlies gelegt. Das entstandene Vlies mit einem Flächengewicht von 60 g/m² wurde anschließend bei 140°C thermisch gebunden und auf eine Dicke von 140 µm kalandert. Das gemessene Ammoniak-Bindevermögen betrug 0,28 mmol NH3 pro g Vliesstoff.
- 4.: Einsatz der unter Einsatz der unter A) 1. genannten modifizierten PP-Fasern zusammen mit den unter A) 3. genannten modifizierten Kern-Mantel-Fasern:
Die beiden Fasern wurden im Mischungsverhältnis 70:30 dispergiert und ein Nassvlies gelegt. Das entstandene Vlies mit einem Flächengewicht von 60 g/m² wurde anschließend bei 145°C thermisch gebunden und auf eine Dicke von 140 µm von 10 N/mm kalandert. Das gemessene Ammoniak-Bindevermögen betrug 0,42 mmol NH3 pro g Vliesstoff.
- 5.: Einsatz der unter A) 5 modifizierten Kurzschnittfasern:
Die Fasern wurden dispergiert und ein Nassvlies gelegt. Das entstandene Vlies mit einem Flächengewicht von 60 g/m² wurde anschließend bei 140°C thermisch gebunden und auf eine Dicke von 140 µm kalandert. Das gemessene Ammoniak-Aufnahmevermögen betrug 0,3 mmol NH3 / g Vliesstoff.
- 6.: Vergleichsbeispiel (Nullprobe):
Als Vergleichsbeispiel wurde das kommerziell erhältliche Produkt FS 2226-14 der Freudenberg Vliesstoffe (Flächengewicht von 60 g/m², Dicke von 140 µm) herangezogen, welches aus nicht-modifizierten Polyolefin-Fasern besteht. Das gemessene Ammoniak-Bindevermögen betrug 0 mmol NH3 pro g Vliesstoff.
- C): Meltblown-Vliesstoffe aus Polymeren:
Mit dem unter A) 4. beschriebenen modifizierten Polypropylen wurde mit Hilfe der Meltblown-Technologie bei Spinntemperaturen um 270 °C ein Vliesstoff mit einem Flächengewicht von 35 g/m² und einer Dicke von 120 µm hergestellt. Die Faserstärken des Materials lagen im Bereich 2-4 µm. Der Vliesstoff wies ein Ammoniak-Bindevermögen von 0,62 mmol NH3 pro g auf.
- D): Batterie-Ergebnisse bezüglich Selbstentladung:
Die in B) bzw. C) hergestellten Vliesstoff-Separatoren wurden in Batterien eingebaut und hinsichtlich ihres Einflusses auf die Selbstentladung getestet. Zu diesem Zweck wurden jeweils 5 Nickel-Metallhydrid-Zellen der Baugröße AA mit einer Kapazität von 1200 mAh hergestellt, welche Separatoren nach B) 3., B) 4., B) 5. und C) bzw. des
Vergleichsbeispiels B) 6. enthielten. Die Selbstentladungen wurden bei unterschiedlichen Bedingungen gemessen.

Für die Bestimmung des Ammoniakbindevermögens wurde ein Verfahren durchgeführt, welches die folgenden Schritte umfasst:
Etwa 2 g des Separatormaterials werden in 120 ml 8 molarer Kalilauge (KOH) unter Zusatz von 5 ml 0,3 molaren Ammoniaks (NH₃) 3 Tage lang bei 40°C gelagert. Zwei Blindproben ohne Ausgangspolymer werden gleichzeitig angesetzt. Nach der Lagerung werden eventuelle ölige Abscheidungen mit Filterpapier von der Oberfläche aufgenommen und entfernt. Von den ursprünglich 125 ml des Ansatzes wird eine Teilmenge von 100 ml entnommen und das Ammoniak daraus mit Hilfe einer Wasserdampfdestillation in 150 ml destilliertes Wasser, das mit 10 ml 0,1 molarer Salzsäure (HCl) und einigen Tropfen Methylrot als Indikator versetzt ist, übergetrieben. Die Säure wird anschließend mit 0,1 normaler Natronlauge (NaOH) zurücktitriert.

Die nachfolgende Tabelle zeigt die Selbstentladungs- (SE)-Ergebnisse der mit den genannten Vliesstoff-Separatormaterialien hergestellten Batterien.

| Separator | Ammoniak-Aufnahme (mmol/g) | SE (%) (28 d; 20 °C) | SE (%) (7 d; 45 °C) | SE (%) (3 d; 60 °C) |
|---|---|---|---|---|
| FS 2226-14 (Nullprobe) | 0 | 28-30 | 33-36 | 60-65 |
| B) 3. | 0.28 | 21-24 | 24 | 34 |
| B) 4. | 0.42 | 20 | 21 | 29 |
| B) 5. | 0.30 | 21 | 22 | 32 |
| C) | 0.62 | 18 | 15 | 16 |

Es konnte gezeigt werden, dass die im Rahmen der vorliegenden Untersuchung hergestellten, Ammoniak bindenden Separatormaterialien einer Batterie ein deutlich verbessertes Verhalten im Hinblick auf deren Selbstentladungsverhalten verleihen, als Separatoren, die keinen Ammoniak binden können.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervor gehoben, dass die zuvor rein willkürlich gewählten Ausführungsbeispiele lediglich zur Erörterung der erfindungsgemäßen Lehre dienen, diese jedoch nicht auf diese Ausführungsbeispiele einschränken.

## Patentansprüche

1. Vliesstoff, insbesondere zur Verwendung als Separator in Batterien oder elektrochemischen Zellen, umfassend funktionelle Fasern aus mindestens einem Fasermaterial, welches intrinsisch zumindest einen Stoff umfasst, welcher im alkalischen Medium chemisch aktiv oder aktivierbar ist,
**dadurch gekennzeichnet, dass** der Stoff in Volumenbereichen der funktionalen Fasern oberflächenwirksam inkorporiert ist, deren Oberflächen mit dem Medium beaufschlagbar sind.

2. Vliesstoff nach Anspruch 1, **dadurch gekennzeichnet, dass** die funktionellen Fasern Mehrkomponentenfasern umfassen.

3. Vliesstoff nach Anspruch 2, **dadurch gekennzeichnet, dass** die Mehrkomponentenfasern Seite-an-Seite-Fasern umfassen.

4. Vliesstoff nach Anspruch 2 oder 3, **dadurch gekennzeichnet, dass** die Mehrkomponentenfasern Kern-Mantel-Fasern umfassen.

5. Vliesstoff nach einem der Ansprüche 2 bis 4, **dadurch gekennzeichnet, dass** ausschließlich eine Komponente der Mehrkomponentenfasern den Stoff umfasst.

6. Vliesstoff nach Anspruch 4 oder 5, **dadurch gekennzeichnet, dass** die Mantelkomponente den Stoff oder eine außen liegende Komponente umfasst.

7. Vliesstoff nach einem der Ansprüche 1 bis 6, **gekennzeichnet durch** eine Fasermischung mit einem Anteil an funktionalen Fasern von mindestens 15 Gewichts-%.

8. Vliesstoff nach einem der Ansprüche 1 bis 7, **dadurch gekennzeichnet, dass** zumindest ein Stoff als durch Copolymerisation gebildetes Polymer ausgebildet ist.

9. Vliesstoff nach einem der Ansprüche 1 bis 8, **dadurch gekennzeichnet, dass** zumindest ein Stoff als durch Pfropfung gebildetes Polymer ausgebildet ist.

10. Vliesstoff nach Anspruch 8 oder 9, **dadurch gekennzeichnet, dass** die Polymere funktionelle Gruppen enthalten, welche im alkalischen Medium als Lewis-Säuren wirksam sind.

11. Vliesstoff nach einem der Ansprüche 8 bis 10, **dadurch gekennzeichnet, dass** die Polymere Polypropylen umfassen.

12. Vliesstoff nach einem der Ansprüche 8 bis 11, **dadurch gekennzeichnet, dass** die Polymere Polyethylen umfassen.

13. Vliesstoff nach einem der Ansprüche 8 bis 12, **dadurch gekennzeichnet, dass** die Polymere Polyolefine umfassen.

14. Vliesstoff nach einem der Ansprüche 1 bis 13, **gekennzeichnet durch** ein Ammoniakaufnahmevermögen von mindestens 0,1 mmol/g.

15. Vliesstoff nach einem der Ansprüche 1 bis 14, **gekennzeichnet durch** eine Fasermischung, welche gegenüber konzentrierter Lauge hydrolysebeständige Fasern umfasst.

16. Vliesstoff nach einem der Ansprüche 1 bis 15, **gekennzeichnet durch** hydrophile Eigenschaften.

17. Vliesstoff nach Anspruch 16, welcher durch eine Fluorierung behandelt ist.

18. Vliesstoff nach Anspruch 16, welcher durch eine Plasmabehandlung behandelt ist.

19. Vliesstoff nach Anspruch 16, welcher durch eine Sulfonierung behandelt ist.

20. Vliesstoff nach Anspruch 16, **gekennzeichnet durch** gepfropfte polare ungesättigte organische Substanzen.

21. Vliesstoff nach Anspruch 16, **gekennzeichnet durch** eine Hydrophilierung mittels eines Netzmittels.

22. Vliesstoff nach einem der Ansprüche 1 bis 21, **gekennzeichnet durch** ein Flächengewicht von 15 bis 300 g/m².

23. Vliesstoff nach einem der Ansprüche 1 bis 22, **gekennzeichnet durch** eine Dicke von 20 bis 400 µm.

24. Vliesstoff nach einem der Ansprüche 1 bis 23, welcher durch eine Nassvlies-Technologie gefertigt ist.

25. Vliesstoff nach einem der Ansprüche 1 bis 23, welcher durch eine Trockenvlies-Technologie gefertigt ist.

26. Vliesstoff nach einem der Ansprüche 1 bis 23, welcher durch eine Herstellung mittels Spinnvlies-Meltblown-Technologie gefertigt ist.

27. Faser, umfassend ein Fasermaterial, welches intrinsisch zumindest einen Stoff umfasst, welcher im alkalischen Medium chemisch aktiv oder aktivierbar ist,
**dadurch gekennzeichnet, dass** der Stoff in Volumenbereichen der Faser oberflächenwirksam inkorporiert ist, deren Oberflächen mit einem Medium beaufschlagbar sind.

28. Faser nach Anspruch 27, **gekennzeichnet durch** einen Durchmesser, der kleiner als 5 µm ist.

29. Faser nach Anspruch 27 oder 28, **gekennzeichnet durch** ein nach dem Verspinnen **durch** den Stoff funktionalisiertes Fasermaterial.

30. Faser nach Anspruch 27 oder 28, **gekennzeichnet durch** ein Verspinnen aus **durch** den Stoff funktionalisiertem Fasermaterial.

31. Faser nach einem der Ansprüche 27 bis 30, **gekennzeichnet durch** einen hochfibrillierten Zustand.

32. Faser nach einem der Ansprüche 27 bis 31, **gekennzeichnet durch** eine geometrische und/ oder stoffliche Ausgestaltung gemäß der in einem Vliesstoff nach einem der Ansprüche 1 bis 26 umfassten Fasern.

33. Elektrochemische Zelle, insbesondere Batterie, mit einem Gehäuse, wobei das Gehäuse zumindest teilweise mindestens eine positive und eine negative Elektrode sowie ein Material aufnimmt, welches den Transport von Ladungsträgern erlaubt, und wobei ein Separator die Elektroden trennt, **dadurch gekennzeichnet, dass** der Separator einen Vliesstoff oder zumindest eine Faser nach einem der vorangehenden Ansprüche umfasst.
